(19) Europäisches Patentamt / European Patent Office / Office européen des brevets

(11) **EP 4 467 619 B1**

(12) **FASCICULE DE BREVET EUROPEEN**

(45) Date de publication et mention
de la délivrance du brevet:
**01.07.2026 Bulletin 2026/27**

(21) Numéro de dépôt: **24177599.8**

(22) Date de dépôt: **23.05.2024**

(51) Classification Internationale des Brevets (IPC):
**C09D 9/00** (2006.01)   **C11D 3/43** (2006.01)
**C09D 7/20** (2018.01)   C11D 3/20 (2006.01)

(52) Classification Coopérative des Brevets (CPC):
**C09D 9/005; C09D 7/20; C11D 3/43;** C11D 3/2024;
C11D 3/2068; C11D 3/2093; C11D 2111/20

(54) **COMPOSITIONS DE SOLVANTS**

LÖSUNGSMITTELZUSAMMENSETZUNGEN

SOLVENT COMPOSITIONS

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **26.05.2023 FR 2305243**

(43) Date de publication de la demande:
**27.11.2024 Bulletin 2024/48**

(73) Titulaire: **AIRBUS OPERATIONS**
**31060 Toulouse Cedex 9 (FR)**

(72) Inventeurs:
• **COURTADON, Alix**
**31060 TOULOUSE (FR)**
• **JULIAN, Jeanne**
**31700 BLAGNAC (FR)**
• **DUBOUE, Claire**
**31700 BLAGNAC (FR)**

(74) Mandataire: **Cabinet Le Guen Maillet**
**3, impasse de la Vigie**
**CS 71840**
**35418 Saint-Malo Cedex (FR)**

(56) Documents cités:
**US-A1- 2003 104 960   US-B1- 6 191 087
US-B1- 6 544 942   US-B2- 10 202 514**

• **INVISTA: "Dibasic Esters (DBE) - technical
information", 31 December 2004 (2004-12-31),
pages 1 - 2, XP093105616, Retrieved from the
Internet <URL:https://www.cleanersolutions.org/
content/download/20986/707787/version/1/file/
dbe+tds-general.pdf> [retrieved on 20231123]**
• **"Ullmann's Encyclopedia of Industrial
Chemistry", 15 June 2000, WILEY-VCH,
Weinheim, ISBN: 978-3-527-30673-2, article
DIETER STOYE: "Solvents", XP055528418, DOI:
10.1002/14356007.a24_437**

**Description**

DOMAINE TECHNIQUE

La présente invention concerne des compositions de solvants, en particulier pour le nettoyage de peintures à base de solvants, plus particulièrement pour le nettoyage de l'équipement utilisé dans la préparation et/ou l'application de peintures industrielles.

ÉTAT DE LA TECHNIQUE ANTÉRIEURE

Au niveau industriel, les peintures sont appliquées comme revêtement à l'aide d'équipements tels que des pompes, des tuyaux, des pistolets, des pinceaux ou encore des rouleaux. Ces équipements doivent être nettoyés une fois l'application de la peinture réalisée. De même, les équipements nécessaires à la préparation de la peinture doivent être nettoyés une fois la peinture préparée. Ces peintures étant à base de solvants, le nettoyage s'effectue à l'aide de solvants.

De nombreux solvants, par exemple organiques ou à base d'eau, sont aujourd'hui disponibles. Cependant, en fonction de leurs compositions, ceux-ci présentent des caractéristiques d'efficacité, de dangerosité en cours d'utilisation ou d'entreposage et de pollution variables.

En effet, les peintures utilisées dans l'industrie, par exemple pour revêtir des pièces mécaniques, sont de compositions variables. Elles peuvent être notamment à base de polyépoxyde, de polyuréthane ou d'autres types de polymères. Certains solvants ne sont pas aptes à dissoudre tout type de peinture et peuvent laisser des résidus ou encore créer des précipités.

Par ailleurs, le point éclair d'un solvant est une caractéristique essentielle en termes de dangerosité. En effet, le point éclair détermine l'inflammabilité du solvant. Il s'agit de la température la plus basse à laquelle un produit dégage assez de vapeur pour former avec l'air un mélange inflammable. Un solvant présentant un point éclair trop bas par rapport à ses conditions d'utilisation ou d'entreposage présente donc de sérieux risques.

Enfin, on sait que les solvants sont l'une des principales sources responsables de l'émission de composés organiques volatils, ou COV. Or, de plus en plus d'entreprises s'inscrivent aujourd'hui dans une démarche de réduction de l'impact environnemental de leurs procédés industriels et mettent en place des systèmes de management environnemental notamment conformes aux normes en vigueur telles que la norme ISO 14001. L'art antérieur est illustré par les documents US 6 191 087 B1, US 2003/104960 A1 et US 10 202 514 B2.

EXPOSÉ DE L'INVENTION

Le but de la présente invention est de proposer des compositions de solvants, en particulier pour le nettoyage d'équipements de préparation et/ou d'application de peintures à base de solvants ou autres revêtements de surface, qui présentent à la fois une efficacité certaine pour ces peintures, une réduction des risques d'inflammabilité liés au point éclair en cours d'utilisation ou d'entreposage et un impact environnemental maîtrisé, en particulier en termes d'émissions de composés organiques volatils.

A cet effet, l'invention concerne une composition de solvants pour peintures ou autres revêtements, caractérisée en ce qu'elle comprend du glutarate de diméthyle et au moins un autre composé choisi parmi l'acétate d'isobutyle, le lactate d'éthyle, le diméthyl 2-méthylglutarate, le 2-methyltétrahydrofurane, l'acétate d'éthyle, l'éther méthylique de cyclopentyle, le diethoxymethane, le carbonate de diméthyle, le succinate de diméthyle, l'alcool benzylique, l'adipate de diméthyle, le triacétate de glycérol.

La composition selon l'invention se montre tout à fait efficace pour dissoudre les peintures solvantées généralement utilisées dans l'industrie, telles que des peintures primaires, des couches de fond (« base coat » en anglais), des couches de finition (« top coat » en anglais), des vernis, notamment des peintures ou autre revêtement à base de polyuréthane, de polyépoxydes ou d'autres types de polymères, et ainsi nettoyer efficacement les équipements de préparation et/ou d'application de peintures.

La composition selon l'invention peut être utilisée avec un risque limité d'inflammabilité. En effet, quelles que soient les combinaisons de composants proposées, celles-ci présenteront un point éclair minimal adapté aux conditions d'utilisation et de stockage.

Ainsi, avantageusement, la composition selon l'invention présente un point éclair supérieur ou égal à 39°C.

Le point éclair peut être déterminé selon des méthodes connues, en coupelle fermée, en particulier en suivant la norme EN ISO 3679 (ou toute autre norme en vigueur spécifiant des procédures d'essai de point d'éclair pour les peintures).

Avantageusement encore, la composition présente une teneur en composés organiques volatils inférieure à 50% en masse.

La teneur en composés organiques volatils peut être mesurée selon des méthodes connues, en suivant la norme EN ISO 11890-1 (ou toute autre norme en vigueur spécifiant des procédures de mesure de COV pour les peintures), en particulier en suivant la méthode 1 de mesure exposée dans la norme EN ISO 11890-1. Selon cette méthode, le pourcentage en masse de composés organiques volatils se calcule selon la formule suivante :

$$VOC = 100 - NV - Ww$$

dans laquelle :

VOC est la teneur en composés organiques volatils, en pourcentage en masse ;

NV est la teneur en composés non volatils en pourcentage en masse ;

Ww est la teneur en eau, en pourcentage en masse.

Préférentiellement, la composition comprend au moins 40% en volume de glutarate de diméthyle, par rapport au volume total de la composition.

Selon un mode de réalisation préféré de l'invention, la composition comprend du glutarate de diméthyle en combinaison avec de l'acétate d'isobutyle et/ou du lactate d'éthyle.

De manière avantageuse, la composition est constituée uniquement de glutarate de diméthyle en combinaison avec de l'acétate d'isobutyle et/ou du lactate d'éthyle.

Avantageusement, la composition comprend entre 50% et 80 % de glutarate de diméthyle et entre 20 et 50% d'acétate d'isobutyle et/ou de lactate d'éthyle, en volume par rapport au volume total de la composition.

Selon un mode de réalisation, la composition comprend entre 50% et 55% de glutarate de diméthyle, entre 30% et 35% d'acétate d'isobutyle et entre 20% et 25% de lactate d'éthyle, en volume par rapport au volume total de la composition.

Selon un autre mode de réalisation, la composition comprend entre 50% et 55 % de glutarate de diméthyle, entre 30% et 35% de lactate d'éthyle et entre 20% et 25% d'acétate d'isobutyle, en volume par rapport au volume total de la composition.

Selon un autre mode de réalisation, la composition comprend entre 50% et 55 % de glutarate de diméthyle et entre 45 % et 50% de lactate d'éthyle ou d'acétate d'isobutyle, en volume par rapport au volume total de la composition.

Selon un autre mode de réalisation, la composition comprend entre 70% et 80 % de glutarate de diméthyle et entre 20 % et 30 % d'acétate d'isobutyle, en volume par rapport au volume total de la composition.

Préférentiellement, la composition selon l'invention comprend au plus 20% d'un composé choisi parmi le diméthyl 2-méthylglutarate, le 2-methyltétrahydrofurane, l'acétate d'éthyle, l'éther méthylique de cyclopentyle, le diethoxymethane, le carbonate de diméthyle, le succinate de diméthyle, l'alcool benzylique, l'adipate de diméthyle, le triacétate de glycérol ou de l'un de leurs mélanges, en volume par rapport au volume total de la composition.

L'invention concerne encore un procédé de nettoyage d'équipements de préparation et/ou d'application de peintures à base de solvants ou d'autres revêtements, caractérisé en ce qu'il comprend au moins une étape de nettoyage desdits équipements à l'aide d'une composition de solvant telle que définie précédemment.

Les caractéristiques de l'invention mentionnées ci-dessus, ainsi que d'autres, apparaîtront plus clairement à la lecture des exemples qui suivent et en lien avec le dessin joint suivant :

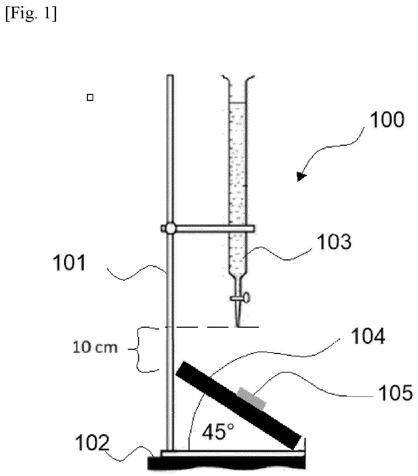

[Fig. 1] est une illustration d'un dispositif utilisé pour déterminer l'efficacité de compositions de solvants selon l'invention.

**EXEMPLES**

**Exemple 1 : tests d'efficacité et mesure du point éclair**

Cinq compositions de solvants (Sol 1 ; Sol 2 ; Sol 3 ; Sol 4 ; Sol 5) selon l'invention ont été préparées selon les mélanges indiqués dans le Tableau 1.

Leur efficacité sur la dissolution de différents types de peintures a été comparée à celle d'un solvant témoin du commerce.

Les noms commerciaux des peintures, ainsi que leur principal composant, sont également indiqués dans le Tableau 1.

Le Tableau 1 ci-dessous indique les résultats des tests d'efficacité, ainsi que le point éclair de chaque composition de solvant.

L'efficacité sur la dissolution de différents types de peinture a été déterminée à l'aide du dispositif 100 illustré sur la Fig. 1. Le dispositif 100 est composé d'un support de burette 101, présentant un socle 102, d'une burette graduée 103 et d'une éprouvette en aluminium 104. La burette 103 est remplie de 10 ml de solvant. La distance entre l'embout de la burette graduée 103 et l'éprouvette en aluminium 104 est de 10 cm. L'éprouvette en aluminium 104 et le socle 102 forment entre eux un angle de 45°. Une bande de peinture 105 solvantée (c'est-à-dire à base de solvants) d'une largeur d'environ 1cm et d'une épaisseur d'environ 30$\mu$m est appliquée sur toute la largeur de l'éprouvette 104. On mesure ensuite la quantité nécessaire de solvant pour dissoudre la couche de peinture 105.

[Table. 1]

| Formulations | | Solvant témoin | Solvant témoin recyclé | Sol 1 | Sol 2 | Sol 3 | Sol 4 | Sol 5 |
|---|---|---|---|---|---|---|---|---|
| Peintures | | 54-58,8% acétate de butyle 40,7-41,5% iso butanol | 58-65 % acétate de butyle 27-37 % iso butanol | 50 % glutarate de diméthyle 50 % acétate d'isobutyle | 75% glutarate de diméthyle 25 % acétate d'isobutyle | 50 % glutarate de diméthyle 20 % acétate d'isobutyle 30% lactate d'éthyle | 50 % glutarate de diméthyle 30 % acétate d'isobutyle 20% lactate d'éthyle | 50 % glutarate de diméthyle 50% lactate d'éthyle |
| Fabriquant peinture 1 | Primaire (époxy) | 0,65 ml | 0,52 ml | 1,15 ml | 0,52 ml | 0,95 ml | 0,30 ml | 0,47 ml |
| | Base coat (Polyuréthane) | 2,68 ml | 2,10 ml | 1,32 ml | 0,68 ml | 1,55 ml | 0,50 ml | 0,70 ml |
| | Top coat (polyuréthane) | 0,62 ml | 0,52 ml | 0,43 ml | 0,23 ml | 0,47 ml | 0,23 ml | 0,37 ml |
| | Vernis CC (polyuréthane) | 0,47 ml | 0,39 ml | 0,20 ml | 0,50 ml | 0,35 ml | 0,47 ml | 0,43 ml |
| Fabriquant peinture 2 | Primaire (époxy) | 0,63 ml | 0, 43 ml | 5,00 ml | 5 ml | 1,85 ml | 0,62 ml | 0,77 ml |
| | Base coat (polyuréthane) | 0,43 ml | 0,21 ml | 0,58 ml | 0,42 ml | 1,28 ml | 0,55 ml | 0,80 ml |
| | Top coat (polyuréthane) | 0,15 ml | 0,28 ml | 0,23 ml | 0,30 ml | 0,40 ml | 0,28 ml | 0,35 ml |
| | Vernis CC (polyuréthane) | 0,62 ml | 0, 37ml | 0,13 ml | 0,73 ml | 0,33 ml | 0,32 ml | 0,50 ml |
| Fabriquant peinture 3 | Primaire (époxy) | 1,00 ml | 0,59 ml | 1,67 ml | 0,52 ml | 1,02 ml | 0,20 ml | 0,52 ml |
| | Base coat (polyuréthane) | 0,97 ml | 0,40 ml | 0,38 ml | 0,22 ml | 0,60 ml | 0,18 ml | 0,50 ml |
| | Top coat (polyuréthane) | 0,58 ml | 0,45ml | 0,27 ml | 0,38 ml | 0,63 ml | 0,25 ml | 0,72 ml |
| | Vernis CC (polyuréthane) | 0,58 ml | 0,52 ml | 0,32 ml | 0,18 ml | 0,40 ml | 0,15 ml | 0,50 ml |
| Efficacité comparée au solvant témoin recyclé (% de cases de couleur gris clair) | | / | / | 58 % | 50 % | 42 % | 75 % | 42 % |
| Efficacité comparée au solvant témoin (% de cases de couleur gris clair + de cases de couleur gris foncé) | | / | / | 67 % | 67 % | 50 % | 92 % | 58 % |
| Point éclair | | 26°C | 26°C | 39,5°C | 47,5°C | 41°C | 42,5°C | 61°C |

On remarque tout d'abord que les cinq solvants selon l'invention présentent un point éclair supérieur à 39 °C alors que le solvant témoin présente un point éclair de 26°C. A une telle valeur, le solvant témoin ne peut être utilisé sans danger alors que les cinq solvants selon l'invention peuvent être utilisés et stockés de manière plus sécurisée.

Par ailleurs, les cinq solvants selon l'invention se sont montrés efficaces pour dissoudre l'ensemble des couches de peinture. Leur efficacité, comparée à celle des témoins, est bien supérieure. En effet, par rapport au solvant témoin, les solutions 1, 2, 3, 4 et 5 présentent une efficacité, respectivement, de 58%, 50%, 42%, 75% et 42%. Par rapport au solvant témoin recyclé, les solutions 1, 2, 3, 4 et 5 présentent une efficacité, respectivement, de 67%, 67%, 50%, 92% et 58%.

On note en particulier que le solvant 4 se distingue en termes d'efficacité.

**Exemple 2 : teneurs en composés organiques volatils**

Les teneurs en composés organiques volatils (COV) des 5 compositions de solvants selon l'invention sont présentées dans le Tableau 2.

[Table 2]

|  | Sol 1 | Sol 2 | Sol 3 | Sol 4 | Sol 5 | N° CAS | COV % | Pression de vapeur à 20°C (Pa) |
|---|---|---|---|---|---|---|---|---|
| Glutarate de diméthyle (L) | 545 | 817,5 | 545 | 545 | 545 | 1119-40-0 | 0% | 8,3 |
| Lactate d'éthyle (L) | 0 | 0 | 206,6 | 206,6 | 516,5 | 97-64-3 | 100% | ? |
| Acétate d'isobutyle (L) | 435,5 | 217,75 | 261,3 | 261,3 | 0 | 110-19-0 | 100% | 2100 |
| Masse pour 1L | 980, 5 | 1035,25 | 1012,9 | 1012,9 | 1061,5 |  |  |  |
| COV g/L | 435,5 | 217,75 | 467,9 | 467,9 | 516,5 |  |  |  |
| % COV théorique | 44,42 % | 21,03 % | 46,19 % | 46,19% | 48,66% |  |  |  |

Les cinq solvants selon l'invention présentent une teneur en COV acceptable, inférieure à 50%. Alors que le solvant témoin présente une teneur en COV de 100%.

**Revendications**

1. Composition de solvants pour peintures ou autres revêtements, **caractérisée en ce qu'**elle comprend entre 50% et 80 % de glutarate de diméthyle et entre 20 et 50% d'acétate d'isobutyle ou d'un mélange d'acétate d'isobutyle et de lactate d'éthyle, en volume par rapport au volume total de la composition.

2. Composition selon la revendication 1, **caractérisée en ce qu'**elle présente un point éclair supérieur ou égal à 39°C.

3. Composition selon la revendication 1 ou 2, **caractérisée en ce qu'**elle présente une teneur en composés organiques volatils inférieure à 50%, en masse.

4. Composition selon l'une des revendications précédentes, **caractérisée en ce qu'**elle comprend entre 50% et 55 % de glutarate de diméthyle, entre 30% et 35% d'acétate d'isobutyle et entre 20% et 25% de lactate d'éthyle, en volume par rapport au volume total de la composition.

5. Composition selon une des revendications 1 à 3, **caractérisée en ce qu'**elle comprend entre 50% et 55 % de glutarate de diméthyle, entre 30% et 35% de lactate d'éthyle et entre 20% et 25% d'acétate d'isobutyle, en volume par rapport au volume total de la composition.

6. Composition selon une des revendications 1 à 3, **caractérisée en ce qu'**elle comprend entre 70% et 80 % de glutarate de diméthyle et entre 20 % et 30 % d'acétate d'isobutyle, en volume par rapport au volume total de la composition.

**7.** Composition selon l'une des revendications précédentes, **caractérisée en ce qu'**elle comprend au plus 20% d'un composé choisi parmi le diméthyl 2-méthylglutarate, le 2-methyltétrahydrofurane, l'acétate d'éthyle, l'éther méthylique de cyclopentyle, le diethoxymethane, le carbonate de diméthyle, le succinate de diméthyle, l'alcool benzylique, l'adipate de diméthyle, le triacétate de glycérol ou de l'un de leurs mélanges, en volume par rapport au volume total de la composition.

**8.** Procédé de nettoyage d'équipements de préparation et/ou d'application de peintures à base de solvants ou d'autres revêtements, **caractérisé en ce qu'**il comprend au moins une étape de nettoyage desdits équipements à l'aide d'une composition de solvants telle que définie dans l'une des revendications 1 à 7

## Patentansprüche

**1.** Lösungsmittelzusammensetzung für Anstrichmittel und andere Beschichtungen, **dadurch gekennzeichnet, dass** sie zwischen 50 und 80 Vol.-% Glutarsäuredimethylester und zwischen 20 und 50 Vol.-% Essigsäureisobutylester oder einer Mischung von Essigsäureisobutylester und Milchsäureethylester, bezogen auf das Gesamtvolumen der Zusammensetzung, umfasst.

**2.** Zusammensetzung nach Anspruch 1, **dadurch gekennzeichnet, dass** sie einen Flammpunkt größer oder gleich 39 °C aufweist.

**3.** Zusammensetzung nach Anspruch 1 oder 2, **dadurch gekennzeichnet, dass** sie einen Gehalt an flüchtigen organischen Verbindungen von weniger als 50 Massen-% aufweist.

**4.** Zusammensetzung nach einem der vorhergehenden Ansprüche, **dadurch gekennzeichnet, dass** sie zwischen 50 und 55 Vol.-% Glutarsäuredimethylester, zwischen 30 und 35 Vol.-% Essigsäureisobutylester und zwischen 20 und 25 Vol.-% Milchsäureethylester, bezogen auf das Gesamtvolumen der Zusammensetzung, umfasst.

**5.** Zusammensetzung nach einem der Ansprüche 1 bis 3, **dadurch gekennzeichnet, dass** sie zwischen 50 und 55 Vol.-% Glutarsäuredimethylester, zwischen 30 und 35 Vol.-% Milchsäureethylester und zwischen 20 und 25 Vol.-% Essigsäureisobutylester, bezogen auf das Gesamtvolumen der Zusammensetzung, umfasst.

**6.** Zusammensetzung nach einem der Ansprüche 1 bis 3, **dadurch gekennzeichnet, dass** sie zwischen 70 und 80 Vol.-% Glutarsäuredimethylester und zwischen 20 und 30 Vol.-% Essigsäureisobutylester, bezogen auf das Gesamtvolumen der Zusammensetzung, umfasst.

**7.** Zusammensetzung nach einem der vorhergehenden Ansprüche, **dadurch gekennzeichnet, dass** sie höchstens 20 Vol.-% einer Verbindung, die aus 2-Methylglutarsäuredimethylester, 2-Methyltetrahydrofuran, Essigsäureethylester, Cyclopentylmethylether, Diethoxymethan, Kohlensäuredimethylester, Bernsteinsäuredimethylester, Benzylalkohol, Adipinsäuredimethylester, Glyceryltriacetat oder einer Mischung davon ausgewählt ist, bezogen auf das Gesamtvolumen der Zusammensetzung, umfasst.

**8.** Verfahren zur Reinigung von Einrichtungen zur Herstellung und/oder Applikation von lösungsmittelbasierten Anstrichmitteln oder anderen Beschichtungen, **dadurch gekennzeichnet, dass** es mindestens einen Schritt der Reinigung der Einrichtungen mit Hilfe einer Lösungsmittelzusammensetzung gemäß einem der Ansprüche 1 bis 7 umfasst.

## Claims

**1.** Solvent composition for paints or other coatings, **characterized in that** it comprises between 50% and 80% of dimethyl glutarate and between 20% and 50% of isobutyl acetate or of a mixture of isobutyl acetate and of ethyl lactate, by volume, with respect to the total volume of the composition.

**2.** Composition according to Claim 1, **characterized in that** it exhibits a flash point of greater than or equal to 39°C.

**3.** Composition according to Claim 1 or 2, **characterized in that** it exhibits a content of volatile organic compounds of less than 50% by weight.

4. Composition according to one of the preceding claims, **characterized in that** it comprises between 50% and 55% of dimethyl glutarate, between 30% and 35% of isobutyl acetate and between 20% and 25% of ethyl lactate, by volume, with respect to the total volume of the composition.

5. Composition according to one of Claims 1 to 3, **characterized in that** it comprises between 50% and 55% of dimethyl glutarate, between 30% and 35% of ethyl lactate and between 20% and 25% of isobutyl acetate, by volume, with respect to the total volume of the composition.

6. Composition according to one of Claims 1 to 3, **characterized in that** it comprises between 70% and 80% of dimethyl glutarate and between 20% and 30% of isobutyl acetate, by volume, with respect to the total volume of the composition.

7. Composition according to one of the preceding claims, **characterized in that** it comprises at most 20% of a compound chosen from dimethyl 2-methylglutarate, 2-methyltetrahydrofuran, ethyl acetate, cyclopentyl methyl ether, diethoxymethane, dimethyl carbonate, dimethyl succinate, benzyl alcohol, dimethyl adipate, glycerol triacetate or of one of their mixtures, by volume, with respect to the total volume of the composition.

8. Process for cleaning items of equipment for the preparation and/or application of solvent-based paints or of other coatings, **characterized in that** it comprises at least one stage of cleaning said items of equipment using a solvent composition as defined in one of Claims 1 to 7.

[Fig. 1]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6191087 B1
- US 2003104960 A1
- US 10202514 B2